# EUROPÄISCHE PATENTSCHRIFT

(11) **EP 3 464 038 B1**
(45) Veröffentlichungstag und Bekanntmachung des Hinweises auf die Patenterteilung: **21.07.2021**
(21) Anmeldenummer: 17715698.1
(22) Anmeldetag: 04.04.2017
(51) Int. Cl.: B62J 25/04, B62J 27/30

(54) **TRITTBRETTANORDNUNG FÜR EIN MOTORRAD**
FOOTBOARD FOR MOTORCYCLE
MARCHEPIED POUR MOTO

(30) Priorität: 06.06.2016 DE 102016209859
(43) Veröffentlichungstag der Anmeldung: 10.04.2019
(73) Patentinhaber: Bayerische Motoren Werke Aktiengesellschaft, 80809 München (DE)
(72) Erfinder: SCHMIDT, Eugen, 81739 München (DE); LANG, Johannes, 86391 Stadtbergen (DE)
(86) Internationale Anmeldenummer: PCT/EP2017/057980
(87) Internationale Veröffentlichungsnummer: WO 2017/211478

(56) Entgegenhaltungen:
- JP-A- H11 255 167
- JP-A- 2000 128 051
- US-A- 4 802 684
- US-A1- 2005 116 443
- US-A1- 2006 103 108
- US-A1- 2011 062 690

## Beschreibung

Die Erfindung betrifft eine Trittbrettanordnung gemäß dem Oberbegriff des Patentanspruchs 1 sowie ein motorradähnliches Fahrzeug, insbesondere ein Motorrad, gemäß dem Oberbegriff des Patentanspruchs 5.

Bei Motorrädern oder motoradähnlichen Fahrzeugen finden Trittbretter Anwendung, um dem Fahrer und/oder einem Sozius während der Fahrt die Möglichkeit zu bieten, seine Füße für die Erhöhung eines Fahrkomforts bequem abzustellen. Hierzu ist in der Regel jeweils ein Trittbrett auf jeder Fahrzeugseite angeordnet, wobei sich die Trittbretter seitlich von dem Fahrzeug weg erstrecken.

Dies führt bei einer Schräglage des Fahrzeuges, beispielsweise beim Durchfahren einer Kurve, dazu, dass das kurveninnere Trittbrett in Kontakt mit der Fahrbahn gelangen und einen Sturz des Fahrers bewirken kann.

Zwar sind Trittbretter bekannt, die klappbar ausgebildet sind, um im Falle eines Kontaktes mit der Fahrbahn ausweichen zu können. Dies bewirkt einerseits eine größere maximale Schräglage des Fahrzeugs, jedoch besteht die Gefahr, dass der Fuß zwischen dem hochgeklappten Trittbrett und dem Motor eingeklemmt wird, falls der Fuß nicht rechtzeitig von dem Trittbrett genommen wird. Zudem bleibt das Trittbrett auch im Falle eines tatsächlichen Sturzes zurückgeklappt, so dass der für den zugehörigen Fuß des Fahrers zur Verfügung stehende Raum unter dem gestürzten Fahrzeug verschwindend klein werden kann. In jedem Fall ist mit Verletzungen des Fußes zu rechnen ist.

Ein Trittbrett für ein Motorrad ist beispielsweise aus der WO99/37527 bekannt.

Des Weiteren müssen bekannte Trittbretter äußerst stabil dimensioniert werden, um die durch den Fahrer auf das Trittbrett ausgeübten Trittlasten aufnehmen zu können. Hierdurch wird einerseits die Gesamtmasse des Fahrzeuges erhöht und andererseits aufgrund der seitlichen Erstreckung eine Fahrstabilität beeinflusst.

Ferner sind aus der US 4 802 684 A, JP H11 255 167 A und JP 2000 128 051 A weitere Trittbrettanordnungen bekannt. Im Gegensatz dazu zeigen die US 2011/062690 A1, US 2005/116443 A1 und US 2006/103108 A1 Motorräder mit klappbaren Fußrasten. Das Dokument JP H11 255 167 A zeigt die Merkmale der Präambel des Anspruchs 1.

Eine Aufgabe der Erfindung ist es daher, ein Trittbrett bereitzustellen, welches einerseits ein komfortables Aufstellen des Fußes während der Fahrt ermöglicht, und andererseits eine Verletzungsgefahr im Falle eines Sturzes zumindest reduziert und dennoch möglichst gewichts- und materialsparend ausgebildet ist.

Diese Aufgabe wird gelöst mit einer Trittbrettanordnung mit den Merkmalen des Patentanspruchs 1 sowie einem motorradähnlichen Fahrzeug gemäß Patentanspruch 5. Vorteilhafte Ausführungsformen ergeben sich aus den jeweils abhängigen Patentansprüchen.

Demnach wird eine Trittbrettanordnung zum seitlichen Anordnen an einem motorradähnlichen Fahrzeug, insbesondere einem Motorrad, bereitgestellt, mit einem Schutzbügel zum seitlichen Schutz eines Fahrzeugmotors, und einem Trittbrett zum Aufstellen eines Fußes eines Nutzers, also eines Fahrers und/oder eines Sozius, wobei das Trittbrett um eine Drehachse zumindest zwischen einer Ausgangsposition und mindestens einer geklappten Position klappbar ausgebildet ist, wobei eine Unterseite des Trittbrettes in der Ausgangsposition lösbar auf dem Schutzbügel aufliegt.

Die Trittbrettanordnung umfasst also das Trittbrett, das im Bedarfsfall hochgeklappt werden kann. Im Normalfall befindet sich das Trittbrett in der Ausgangsposition, in der das Trittbrett mit seiner Unterseite auf dem Schutzbügel aufliegt. Dies bedeutet, dass dem Schutzbügel eine doppelte Funktion zukommt. Einerseits ist der Schutzbügel gemäß seiner üblichen Schutzfunktion als seitlicher Schutz des Fahrzeugmotors ausgeführt, um diesen im Falle eines Sturzes beziehungsweise eines Umkippens des Fahrzeugs vor einer Kollision mit dem Boden zu bewahren und größere Schäden zu vermeiden.

Zusätzlich dient der Schutzbügel der beschriebenen Trittbrettanordnung aber auch als Unterstützung des Trittbrettes, sofern sich dieses in der Ausgangsposition befindet und (in dieser) auf dem Schutzbügel aufliegt. Die Anordnung bietet die Möglichkeit, die durch den Fahrerfuß auf das Trittbrett eingeleitete Trittbelastung nicht nur wie üblich über das Trittbrett selbst sondern zusätzlich und zu großen Teilen über den Schutzbügel aufzunehmen. Da dieser ohnehin besonders stabil zum Schutz des Fahrzeugmotors und im Ernstfall zum Abstützen des Fahrzeuges ausgelegt ist, kann der Schutzbügel diese "Zusatzfunktion" ohne weitere Verstärkung übernehmen. Demzufolge kann das Trittbrett leichter und weniger massiv dimensioniert werden, als dies ohne die Stützfunktion durch den Schutzbügel der Fall wäre. Auf diese Weise wird nicht nur das absolute Gesamtgewicht des Fahrzeuges reduziert, sondern auch die seitlich ausladende Masse des Trittbrettes, so dass eine Fahrstabilität positiv beeinflusst werden kann.

Mit Hilfe der Kombination aus klappbarem Trittbrett und Schutzbügel ist es zudem möglich, eine Verletzungsgefahr für den Nutzer deutlich zu reduzieren. Während das klappbare Trittbrett eine maximale Schräglage des Fahrzeuges gegenüber einem festmontierten Trittbrett erhöht, indem das Trittbrett im Kontaktfalle mit der Fahrbahn beziehungsweise mit dem Boden durch eine Klappbewegung ausweichen kann, verhindert der Schutzbügel aufgrund seiner räumlichen Nähe zu dem Trittbrett, dass ein Fuß des Nutzers zwischen Fahrzeugmotor und hochklappendem Trittbrett beziehungsweise zwischen Fahrzeugmotor und Boden eingeklemmt werden kann. Vielmehr stellt der Schutzbügel aufgrund seiner Schutzfunktion für den Fahrzeugmotor den Erhalt eines definierten Sicherheitsraums zwischen Fahrzeugmotor und Boden sicher, selbst wenn das Fahrzeug vollständig auf einer Seite liegt.

Die Drehachse des Trittbrettes ist im verbauten Zustand am Fahrzeug vorzugsweise in Fahrzeuglängsrichtung (identisch zur Hautfahrtrichtung) orientiert oder zumindest im Wesentlichen parallel zu der zugehörigen Fahrzeugseite, um ein Auflegen des Trittbrettes auf den Schutzbügel in der Ausgangsposition sowie ein seitliches Anklappen des Trittbrettes an das Fahrzeug bei Erreichen der entsprechenden Fahrzeugschräglage sicherzustellen, so dass ein seitliches Neigen des Fahrzeuges nicht behindert wird. Die Klappbarkeit des Trittbrettes verhindert somit bei Erreichen der Grenzschräglage einen Kontakt beziehungsweise eine Kollision des Trittbrettes mit dem Boden, durch den das Fahrzeug anderenfalls in einen instabilen Zustand geraten würde. Als mindestens eine geklappte Position ist zumindest eine definierte Endposition und/oder eine Anzahl von zusätzlichen Zwischenpositionen zwischen der Ausgangsposition und der Endposition zu verstehen, wobei die Zwischenpositionen stufenlos ohne definierte Verrastung oder dergleichen ausgeführt sind.

Als motorradähnliche Fahrzeuge sind beispielsweise Einspurfahrzeuge oder Zweispurfahrzeuge, insbesondere solche mit sattelartigem Fahrersitz, und Fahrzeuge, die eine Schräglage ermöglichen, wie Scooter, zweirädrige, dreirädrige oder vierrädrige Motorroller, zu verstehen.

Erfindungsgemäß umfasst der Schutzbügel ein gebogenes Rohr mit einem ersten Ende und einem zweiten Ende**,** wobei das erste Ende und das zweite Ende zum Verbinden mit dem Fahrzeug, insbesondere einem Fahrzeugrahmen oder dem Fahrzeugmotor, ausgebildet sind. Dies bedeutet, dass der Schutzbügel zumindest im Bereich seiner beiden Enden mit dem Fahrzeug verbunden werden kann. Der Schutzbügel weist beispielsweise eine gebogene Form auf, so dass beide Enden in dieselbe Richtung weisen, nämlich im verbauten Zustand in Richtung des Fahrzeuges. Ein zwischen den beiden Enden angeordneter Zwischenbereich des gebogenen Rohres kann entsprechend gebogen ausgeführt sein, so dass der Schutzbügel zum Beispiel eine im Wesentlichen U-förmige oder V-förmige Gestalt aufweist. Das Trittbrett liegt hierbei zumindest in einem Abschnitt des Zwischenbereichs oder auf dem gesamten Zwischenbereich auf. Mit anderen Worten, kann das Trittbrett auf dem gesamten Zwischenbereich aufliegt, oder lediglich teilweise, so dass der Zwischenbereich unter dem Trittbrett hervorsteht.

Erfindungsgemäß ist das Trittbrett im Bereich der Drehachse klappbar mit dem Schutzbügel, insbesondere dem ersten und/oder zweiten Ende des Schutzbügels, verbunden. Trittbrett und Schutzbügel können somit zu einem gemeinsamen Modul unmittelbar miteinander verbunden sein, wobei das Trittbrett dennoch relativ zu dem Schutzbügel klappbar ausgeführt ist, um leicht gemeinsam verbaut und am Fahrzeug befestigt werden zu können.

Entsprechend einer bevorzugten Ausführungsform steht das Trittbrett mit mindestens einem Randabschnitt über den Schutzbügel über oder schließt mit diesem bündig ab. Im Falle eines Überstandes bedeutet dies, dass das Trittbrett in dem entsprechenden Randbereich nicht auf dem Schutzbügel aufliegt. Die Unterseite des Trittbrettes ist demnach, je nach Größe des Überstandes, in diesem Randbereich frei, so dass die Unterseite bei einer Schräglage des Fahrzeuges in Kontakt mit dem Boden kommen kann. Dies ermöglicht grundsätzlich ein Hochklappen des Trittbrettes bei Bodenkontakt noch bevor der Schutzbügel den Boden berührt.

Ferner kann die Trittbrettanordnung eine Rückstellfeder umfassen, die zum Rückstellen des Trittbrettes aus der mindestens einen geklappten Position in die Ausgangsposition ausgebildet ist. Die Rückstellfeder sorgt für das nötige Rückstellmoment und stellt sicher, dass das Trittbrett nach einem Hochklappen in die mindestens eine geklappte Position wieder in die Ausgangsposition zurückgeklappt wird, wenn das Fahrzeug wieder aufrichtet wird.

Außerdem kann das Trittbrett auf einer Unterseite einen stiftförmigen Fortsatz aufweisen, der sich von der Unterseite weg erstreckt. Vorzugsweise ist der stiftförmige Fortsatz in einem Bereich der Unterseite angebracht, die aufgrund ihrer geometrischen Anordnung zuerst mit einem Boden in Kontakt kommt, wenn sich das Fahrzeug in Schräglage neigt, wie zum Beispiel im Bereich eines eventuellen Überstandes des Trittbrettes über den Schutzbügel und dessen Zwischenabschnitt hinaus.

In diesem Fall kontaktiert zuerst der stiftförmige Fortsatz den Boden und bewirkt ein Hochklappen des Trittbrettes aus der Ausgangsposition. Auf diese Weise wird ein Kontakt der Unterseite des Trittbrettes mit dem Boden und damit eine entsprechende Beschädigung des Trittbrettes, vermieden. Stattdessen wird der stiftförmige Fortsatz "geopfert" und kann vorzugsweise leicht austauschbar mit dem Trittbrett verbunden sein, zum Beispiel mittels einer Verschraubung.

Des Weiteren wird ein motorradähnliches Fahrzeug, insbesondere Motorrad, bereitgestellt, mit mindestens einer Trittbrettanordnung, die gemäß dieser Beschreibung ausgebildet ist.

Hierbei kann das Trittbrett auf einer dem Nutzer zugewandten Seite des Schutzbügels angeordnet sein und eine dem Nutzer zugewandte Trittfläche aufweisen. So kann durch eine geeignete Neigung des Schutzbügels und damit des aufliegenden Trittbretts eine Anpassung vorgenommen werden, um neben der Schutzfunktion des Schutzbügels auch einem Komfortanspruch gerecht zu werden, so dass der Nutzer während der Fahrt seine Füße bequem abstellen kann. Vorzugsweise ist die Ausrichtung derart gewählt, dass sich ein ergonomisch sinnvoller Winkel für die Beine des Nutzers und deren Abwinklung ergibt und somit das Komforterlebnis auch bei längeren Fahrten sichergestellt ist.

Wie bereits beschrieben, kann je nach Ausführung des Fahrzeuges jeweils eine Trittbrettanordnung auf einer linken und/oder rechten Fahrzeugseite im Bereich eines Fahrzeugmotors zum seitlichen Schutz des Fahrzeugmotors angeordnet sein.

Zusammenfassend ermöglicht die bereitgestellte Trittbrettanordnung also gegenüber herkömmlichen Trittbrettern eine besonders vorteilhafte Kombination mehrerer Eigenschaften und Funktionen der beteiligten Komponenten. So bekommt der Schutzbügel neben seinen Sicherheitsfunktionen hinsichtlich Fahrzeugmotorschutz und Fußschutz auch eine zusätzliche Funktion hinsichtlich des Komforts, so dass der Schutzbügel und der dadurch abgesicherte Bauraum gleich mehrfach genutzt werden kann. Auch beschränkt mit der beschriebenen Trittbrettanordnung das Trittbrett nicht die maximale Schräglage des Fahrzeugs, was zumindest bei bisher festverbauten Trittbrettern besonders nachteilig ist, sondern bietet zusammen mit dem Schutzbügel einen Sicherheitsraum für die Füße des Fahrers im Falle eines Sturzes, gegenüber bisher eingesetzten drehbar gelagerten Trittbrettern.

Somit ist die beschriebene Trittbrettanordnung Teil eines passiven Sicherheitskonzepts des Fahrzeugs, welches sich aus mehreren Warnstufen zusammensetzt: so wird vor Erreichen der Grenzschräglage zuerst das Trittbrett hochgeklappt und erst bei einer weiteren Neigung berührt der Schutzbügel den Boden. Der Fahrer ist also bereits vorgewarnt und kann Gegenmaßnahmen einleiten. Optional können an dem Fahrzeug Fußrasten derart angeordnet sein, dass diese nach dem Hochklappen des Trittbrettes als zusätzliche und zwischengeschaltete Warnstufe ebenfalls in Bodenkontakt gelangt und hochklappen, bevor der Schutzbügel den Boden berührt.

Die Erfindung wird nachfolgend anhand eines Ausführungsbeispiels unter Bezugnahme auf die Zeichnungen näher erläutert. Es zeigen:
Fig. 1 eine perspektivische Teilansicht eines Motorrades mit einem Schutzbügel gemäß der Beschreibung,
Fig. 2 eine perspektivische Teilansicht des Motorrades aus Fig. 1 mit einem Trittbrett in Ausgangsposition,
Fig. 3 eine perspektivische Teilansicht des Motorrades aus Fig. 2 mit hochgeklapptem Trittbrett,
Fig. 4 eine weitere Teilansicht des Motorrades in Fahrzeuglängsrichtung mit hochgeklapptem Trittbrett, und
Fig. 5 eine perspektivische Unteransicht des Motorrades mit dem Trittbrett in Ausgangsposition.

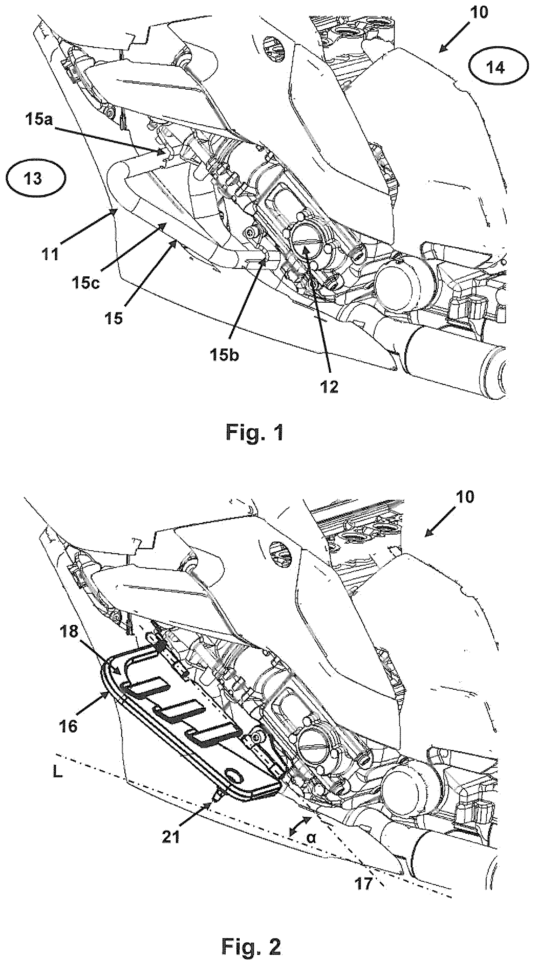

In Fig. 1 und 2 ist jeweils eine perspektivische Teilansicht eines Motorrades 10 dargestellt, das zwei Trittbrettanordnungen gemäß der Beschreibung umfasst, wobei eine erste Trittbrettanordnung 11 auf der dargestellten linken und eine zweite, spiegelsymmetrisch ausgeführte Trittbrettanordnung (nicht dargestellt) auf der nicht sichtbaren, rechten Fahrzeugseite im Bereich eines Fahrzeugmotors 12 zu dessen seitlichem Schutz angeordnet sind. Ein zugehöriges Trittbrett 16 ist in Fig. 1 zum besseren Verständnis ausgeblendet und lediglich in den Fig. 2 bis 5 dargestellt. Das Motorrad 10 ist der übersichtlichkeit halber lediglich teilweise dargestellt, wobei die Positionen eines Vorderrades 13 und eines Sitzes 14 für einen Nutzer, insbesondere einen Fahrer und/oder Sozius, lediglich schematisch zur besseren Orientierung angedeutet, jedoch nicht näher dargestellt sind.

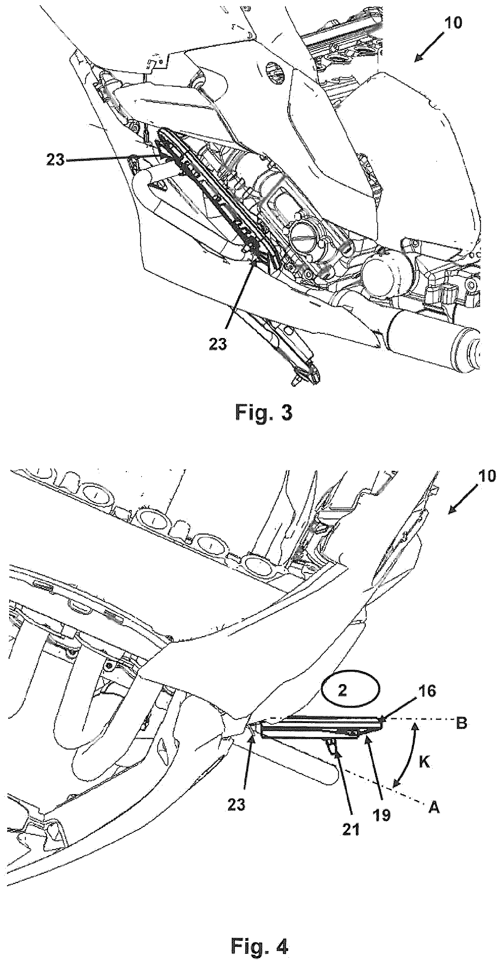

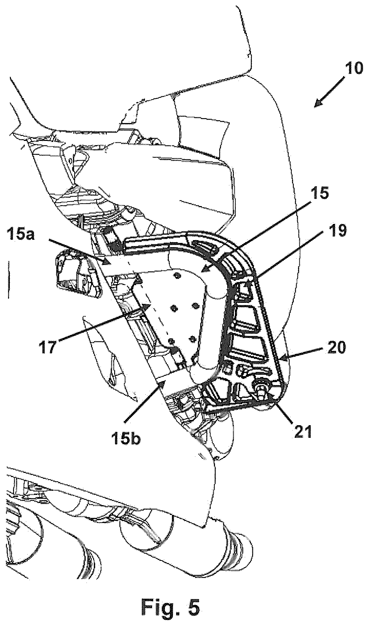

Die in Fig. 1 dargestellte und seitlich am Fahrzeug 10 angeordnete Trittbrettanordnung 11 umfasst einen Schutzbügel 15, der zum seitlichen Schutz des Fahrzeugmotors 12 vorgesehen ist. Zusätzlich umfasst die Trittbrettanordnung 11 das Trittbrett 16 zum Aufstellen eines Fußes des Nutzers, wobei das Trittbrett 16 um eine Drehachse 17 zumindest zwischen einer in Fig. 2 und 5 dargestellten Ausgangsposition A und mindestens einer geklappten Position B (siehe Fig. 3 und 4) klappbar ausgebildet ist. Das Trittbrett 16 ist auf einer dem Nutzer zugewandten Seite des Schutzbügels 15 angeordnet und weist eine dem Nutzer zugewandte Trittfläche 18 auf. In der Ausgangsposition A liegt eine Unterseite 19 des Trittbrettes 16 lösbar auf dem Schutzbügel 15 auf, so dass eine auf das Trittbrett 16 wirkende Trittkraft auf den Schutzbügel 15 übertragen wird. Das Trittbrett 16 muss dank dieser Unterstützung eine erheblich geringere Kraft aufnehmen, als dies ohne den unterstützenden Schutzbügel 15 der Fall wäre. Dies erfolgt aufgrund der vorteilhaften Anordnung ohne zusätzliche kosten- und gewichtserhöhende Veränderungen des Schutzbügels 15.

Der Schutzbügel 15 ist als ein gebogenes Rohr ausgebildet und umfasst ein erstes Ende 15a und ein zweites Ende 15b, wobei das erste Ende 15a und das zweite Ende 15b mit dem Motorrad 10, mit dessen Fahrzeugrahmen oder - wie in Fig. 1 und 2 dargestellt - mit dem Fahrzeugmotor 12 beziehungsweise dessen Gehäuse mittels Verschraubung verbunden ist. Zusätzlich ist das Trittbrett 16 im Bereich der Drehachse 17 klappbar mit dem Schutzbügel 15 im Bereich des ersten 15a und zweiten Endes 15b des Schutzbügels 15 verbunden. Zusätzlich ist zwischen den beiden Enden 15a,15b ein Zwischenbereich 15c angeordnet, der entsprechend gebogen ausgeführt ist, so dass der Schutzbügel 15 (wie dargestellt) eine im Wesentlichen U-förmige beziehungsweise V-förmige Gestalt aufweist. Das Trittbrett 16 liegt hierbei in der Ausgangsposition A auf dem gesamten Zwischenbereich 15c auf.

Wie insbesondere in der teilweisen und perspektivischen Unteransicht in Fig. 5 dargestellt, steht das Trittbrett 16 in der Ausgangsposition A mit einem dem Fahrzeug 10 abgewandten Randabschnitt 20 über den Schutzbügel 15 über. In dem überstehenden Randabschnitt 20 weist das Trittbrett 16 auf der Unterseite 19 einen stiftförmigen Fortsatz 21 auf, der sich von der Unterseite 19 in Richtung des Bodens weg erstreckt, auf dem das Fahrzeug 10 steht. Erreicht das Fahrzeug 10 also eine Grenzschieflage, so berührt zunächst der stiftförmige Fortsatz 21 den Boden, so dass bei weiter zunehmender Schieflage das Trittbrett 16 in Richtung des Fahrers um die Drehachse 17 hochgeklappt wird (Pfeil K in Fig. 4).

Der Fahrer wird auf diese Weise gewarnt, ohne dass das Trittbrett 16 selbst beschädigt wird. Wird die Schieflage des Motorrades 10 noch weiter erhöht und kommt es zum Sturz, berührt der Schutzbügel 15 den Boden und schützt den Fahrzeugmotor 12 vor einer entsprechenden Kollision und Beschädigung. Wie insbesondere aus Fig. 4 erkennbar ist, wird aufgrund dieser Anordnung aber auch im Bereich des Trittbretts 16 ein Raum 22 geschaffen, der verhindert, dass ein sich dort befindlicher Fuß zwischen Boden und Fahrzeugmotor 12 beziehungsweise Fahrzeug 10 eingeklemmt wird, wodurch eine Verletzungsgefahr erheblich reduziert werden kann.

Zusätzlich umfasst die Trittbrettanordnung 11 Rückstellfedern 23, die zum Rückstellen des Trittbrettes 16 aus der mindestens einen geklappten Position B in die Ausgangsposition A ausgebildet sind, sobald der Bodenkontakt entfällt und das Motorrad 10 die Schieflage wieder verlässt, um sich aufzurichten.

Sowohl der Schutzbügel 15 als auch das darauf aufliegende Trittbrett 16 sind mit einem Winkel α gegenüber der Fahrzeuglängsrichtung L beziehungsweise der gleichgerichteten Hauptfahrtrichtung angestellt und somit in Richtung des auf dem Sitz 14 positionierten Nutzers gekippt. Auf diese Weise wird eine ergonomische Haltung während der Fahrt gefördert und ein Fahrkomfort deutlich erhöht.

## Patentansprüche

1. Trittbrettanordnung (11) zum seitlichen Anordnen an einem motorradähnlichen Fahrzeug (10), insbesondere einem Motorrad, mit einem Schutzbügel (15) zum seitlichen Schutz eines Fahrzeugmotors (12), und einem Trittbrett (16) zum Aufstellen eines Fußes eines Nutzers, wobei das Trittbrett (16) um eine Drehachse (17) zumindest zwischen einer Ausgangsposition (A) und mindestens einer geklappten Position (B) klappbar ausgebildet ist, und der Schutzbügel (15) als ein gebogenes Rohr mit einem ersten Ende (15a) und einem zweiten Ende (15b) ausgebildet ist, wobei das erste Ende (15a) und das zweite Ende (15b) mit dem Fahrzeugmotor (12) mittels Verschraubung verbunden sind, und ein zwischen den beiden Enden (15a,15b) angeordneter Zwischenbereich (15c) des gebogenen Rohres entsprechend gebogen ausgeführt ist, so dass der Schutzbügel (15) eine im Wesentlichen U-förmige oder V-förmige Gestalt aufweist, **dadurch gekennzeichnet, dass** das Trittbrett (16) im Bereich der Drehachse (17) klappbar mit dem Schutzbügel (15) im Bereich des ersten (15a) und zweiten Endes (15b) des Schutzbügels (15) verbunden ist, und außerdem eine Unterseite (19) des Trittbretts (16) zumindest in einem Abschnitt des Zwischenbereichs (15c) oder auf dem gesamten Zwischenbereich (15c) des Schutzbügels (15) zur Unterstützung des klappbaren Trittbretts (15) in der Ausgangsposition (A) lösbar auf dem Schutzbügel (15) aufliegt.

2. Trittbrettanordnung nach Anspruch 1, **dadurch gekennzeichnet, dass** das Trittbrett (16) mit mindestens einem Randabschnitt (20) über den Schutzbügel (15) übersteht oder mit diesem bündig abschließt.

3. Trittbrettanordnung nach mindestens einem der Ansprüche 1 oder 2, **dadurch gekennzeichnet, dass** die Trittbrettanordnung (11) mindestens eine Rückstellfeder (23) umfasst, die zum Rückstellen des Trittbrettes (16) aus der mindestens einen geklappten Position (B) in die Ausgangsposition (A) ausgebildet ist.

4. Trittbrettanordnung nach mindestens einem der Ansprüche 1 bis 3, **dadurch gekennzeichnet, dass** das Trittbrett (16) auf der Unterseite (19) einen stiftförmigen Fortsatz (21) aufweist, der sich von der Unterseite (19) weg erstreckt.

5. Motorradähnliches Fahrzeug (10), insbesondere Motorrad, mit mindestens einer Trittbrettanordnung (11), **dadurch gekennzeichnet, dass** die Trittbrettanordnung (11) nach einem der Ansprüche 1 bis 4 ausgebildet ist.

6. Fahrzeug nach Anspruch 5, **dadurch gekennzeichnet, dass** das Trittbrett (16) auf einer dem Nutzer zugewandten Seite des Schutzbügels (15) angeordnet ist und eine dem Nutzer zugewandte Trittfläche (18) aufweist.

7. Fahrzeug nach mindestens einem der Ansprüche 5 oder 6, **dadurch gekennzeichnet, dass** jeweils eine Trittbrettanordnung (11) auf einer linken und/oder rechten Fahrzeugseite im Bereich des Fahrzeugmotors (12) zum seitlichen Schutz des Fahrzeugmotors (12) angeordnet ist.

## Claims

1. Footboard arrangement (11) for arranging on the sides of a motorcycle-like vehicle (10), in particular a motorcycle, with a hoop guard (15) for the lateral protection of a vehicle engine (12), and a footboard (16) for placing a foot of a user, the footboard (16) being configured such that it can be folded about a rotational pin (17) at least between a starting position (A) and at least one folded position (B), and the hoop guard (15) being configured as a bent tube with a first end (15a) and a second end (15b), the first end (15a) and the second end (15b) being connected to the vehicle engine (12) by means of a screw connection, and an intermediate region (15c) of the bent tube, which intermediate region (15c) is arranged between the two ends (15a, 15b), being of correspondingly bent configuration, with the result that the hoop guard (15) has a substantially U-shaped or V-shaped design, **characterized in that** the footboard (16) is connected in the region of the rotational pin (17) such that it can be folded to the hoop guard (15) in the region of the first (15a) and second end (15b) of the hoop guard (15), and, moreover, an underside (19) of the footboard (16) lies releasably on the hoop guard (15) in the starting position (A) at least in a section of the intermediate region (15c) or on the entire intermediate region (15c) of the hoop guard (15) in order to support the foldable footboard (15).

2. Footboard arrangement according to Claim 1, **characterized in that**, with at least one edge section (20), the footboard (16) projects beyond the hoop guard (15) or terminates flush with the latter.

3. Footboard arrangement according to at least one of Claims 1 and 2, **characterized in that** the footboard arrangement (11) comprises at least one restoring spring (23) which is configured to return the footboard (16) from the at least one folded position (B) into the starting position (A).

4. Footboard arrangement according to at least one of Claims 1 to 3, **characterized in that**, on the underside (19), the footboard (16) has a pin-shaped projection (21) which extends away from the underside (19).

5. Motorcycle-like vehicle (10), in particular motorcycle, with at least one footboard arrangement (11), **characterized in that** the footboard arrangement (11) is configured according to one of Claims 1 to 4.

6. Vehicle according to Claim 5, **characterized in that** the footboard (16) is arranged on a side of the hoop guard (15), which side faces the user, and has a tread surface (18) which faces the user.

7. Vehicle according to at least one of Claims 5 and 6, **characterized in that** in each case one footboard arrangement (11) is arranged on a left-hand and/or righthand vehicle side in the region of the vehicle engine (12) for the lateral protection of the vehicle engine (12) .

## Revendications

1. Ensemble marchepied (11) destiné à être disposé latéralement sur un véhicule de type moto (10), en particulier une motocyclette, comprenant un étrier de protection (15) pour la protection latérale d'un moteur de véhicule (12), et un marchepied (16) pour la pose d'un pied d'un utilisateur, le marchepied (16) étant réalisé de manière rabattable autour d'un axe de pivotement (17) au moins entre une position initiale (A) et au moins une position rabattue (B), et l'étrier de protection (15) étant réalisé sous la forme d'un tube plié comportant une première extrémité (15a) et une deuxième extrémité (15b), la première extrémité (15a) et la deuxième extrémité (15b) étant reliées au moteur de véhicule (12) par vissage, et une zone intermédiaire (15c) disposée entre les deux extrémités (15a, 15b) du tube plié étant réalisée de manière pliée en correspondance de sorte que l'étrier de protection (15) présente une forme substantiellement en forme de U ou de V,
**caractérisé en ce que** le marchepied (16) est relié au niveau de l'axe de pivotement (17) de manière rabattable à l'étrier de protection (15) au niveau de la première (15a) et de la deuxième extrémité (15b) de l'étrier de protection (15), et en outre, une face inférieure (19) du marchepied (16) repose de manière amovible sur l'étrier de protection (15) au moins dans une partie de la zone intermédiaire (15c) ou sur toute la zone intermédiaire (15c) de l'étrier de protection (15) afin de soutenir le marchepied rabattable (15) dans la position initiale (A).

2. Ensemble marchepied selon la revendication 1, **caractérisé en ce que** le marchepied (16) dépasse par au moins une partie marginale (20) de l'étrier de protection (15) ou se termine en affleurement avec celui-ci.

3. Ensemble marchepied selon au moins l'une des revendications 1 ou 2, **caractérisé en ce que** l'ensemble marchepied (11) comprend au moins un ressort de rappel (23) qui est réalisé pour rappeler le marchepied (16) de ladite au moins une position rabattue (B) à la position initiale (A).

4. Ensemble marchepied selon au moins l'une des revendications 1 à 3, **caractérisé en ce que** le marchepied (16) présente sur la face inférieure (19) une saillie en forme de tige (21) qui s'éloigne de la face inférieure (19).

5. Véhicule de type moto (10), en particulier une motocyclette, comprenant au moins un ensemble marchepied (11), **caractérisé en ce que** l'ensemble marchepied (11) est réalisé selon l'une quelconque des revendications 1 à 4.

6. Véhicule selon la revendication 5, **caractérisé en ce que** le marchepied (16) est disposé sur un côté, tourné vers l'utilisateur, de l'étrier de protection (15) et présente une surface de pose (18) tournée vers l'utilisateur.

7. Véhicule selon au moins l'une des revendications 5 ou 6, **caractérisé en ce que** respectivement un ensemble marchepied (11) est disposé sur un côté de véhicule gauche et/ou droit au niveau du moteur de véhicule (12) pour la protection latérale du moteur de véhicule (12).
